# FASCICULE DE BREVET EUROPEEN

(11) **EP 0 892 595 B1**
(45) Date de publication et mention de la délivrance du brevet: **08.03.2000**
(21) Numéro de dépôt: 97919453.7
(22) Date de dépôt: 01.04.1997
(51) Int. Cl.: A01G 13/02, A01G 13/04

(54) **TAILLEUSE ELEVATRICE SEPARATRICE**
SCHNEID-, HEBE- UND TRENNUNGSVORRICHTUNG
PRUNING MACHINE WITH A LIFTING AND SEPARATING FUNCTION

(30) Priorité: 01.04.1996 FR 9604222
(43) Date de publication de la demande: 27.01.1999
(73) Titulaire: Fontan, Gérard, 32110 Urgosse (FR)
(72) Inventeur: Fontan, Gérard, 32110 Urgosse (FR)
(74) Mandataire: Ravina, Bernard
(86) Numéro de dépôt international: FR9700578
(87) Numéro de publication internationale: WO9736473

(56) Documents cités:
- EP-A- 0 312 126
- EP-A- 0 318 406
- FR-A- 2 476 978
- FR-A- 2 627 346
- FR-A- 2 719 190

## Description

La présente invention concerne une machine de dégagement et d'extraction des bois de taille, notamment pour vignes palissées.

La machine selon l'invention permet de dégager des fils de palissage les bois taillés sur le pied et d'éliminer les bois non taillés.

Il existe différents types de conduite de la vigne à partir de la taille des bois après la récolte. La plus ancienne dite "en gobelets" sans bois longs, ni palissage de soutien régresse en raison de la mécanisation des travaux, notamment la vendange qu'elle supporte difficilement et de l'inadaptation à cette taille de nombreux cépages.

Une autre taille dite "Sylvoz" ou en cordons se pratique sur fils palissés à partir de multiples sarments taillés courts, ce qui permet le passage des machines dites "pré-tailleuses" munies d'organes de coupe ou de sciage dégrossissant la masse des sarments toujours avant la taille et qui s'effacent au passage des tuteurs (ou piquets), les fils de palissage restant en place (brevets 0 312 126 B1 et 89.10661). Beaucoup de cépages supportent mal également cette taille qui se pratique donc après le passage éventuel des pré-tailleuses et qui se complique singulièrement au fil des ans, au point de devenir aussi coûteuse que la taille "Guyot" simple ou double, universellement adoptée.

Lorsque la vigne est conduite selon la taille "Guyot", elle est palissée à l'aide de fils métalliques portés par des tuteurs enfoncés dans le sol.
Ce palissage s'effectue au moyen d'un fil porteur qui reçoit la flèche fructifère du pied de vigne, ce fil étant sensiblement médian au tuteur, d'un fil surbaissé inférieur lorsque la flèche est traitée en arcure, c'est à dire repliée vers le bas, et de un ou deux fils releveurs et d'un fil supérieur en haut du tuteur.
La taille comprend deux opérations :
- Le choix et la taille en quelques coups de sécateur, de sarments dont un ou deux sont conservés à une certaine longueur nommés le plus souvent "flèches" tandis que l'ancienne flèche porteuse de sarments est détachée du cep d'un seul coup de sécateur ou deux lorsqu'elle est attachée en arcure sur un fil surbaissé.
- La coupe et l'extraction manuelle hors du palissage de tous les autres sarments, indésirables, nombreux qui sont jetés au sol et généralement broyés. Cette opération coûteuse en main d'oeuvre, longue, pénible et fastidieuse, est menée en hiver.
On a tenté de la faciliter par le passage des pré-tailleuses, mais elles ne peuvent guère qu'épointer parfois les sarments en raison de la nécessité de conserver des flèches suffisamment longues et productives.

Le fil porteur sur lequel est arquée ou enroulée la flèche fructifère, attachée par des liens, repose sur le tuteur grâce à une encoche pratiquée dans le tuteur métallique, grâce à un crochet quand il s'agit de tuteur en matière plastique ou en béton, ou à l'aide de pointes enfoncées de biais lorsqu'il s'agit de tuteurs en bois, cas le plus fréquent.
Dans tous les cas, la fixation par des crampons fixes doit être proscrite afin que le fil porteur soit mobile. Le fil releveur lui est toujours mobile ; il repose dans une encoche, un crochet ou sur une pointe enfoncée de biais et peut être saisi manuellement ou par une palisseuse lors des relevages d'été. Le palissage, outre le fil porteur, comporte généralement deux fils releveurs et un fil surbaissé s'il s'agit d'arcure.

Le plus souvent, un dernier fil supérieur est fixé au sommet du tuteur. En règle générale, pour dégager le cep, il ne sera pas nécessaire de le soulever, pas plus que le fil surbaissé, ni le fil releveur situé sur la face de la rangée extérieure au déport latéral de la machine, soit en pratique deux fils, un porteur et un releveur à soulever et à écarter à l'intérieur pour extraire les bois.

Toutefois, en cas de taille exceptionnellement très longue nécessitant une élévation maximale des organes afin de dégager et protéger le cep, des rouleaux ou glissières seront ajoutés en conséquence afin de relever le nombre de fils amovibles, par exemple le fil supérieur et séparer totalement les bois de taille solidaires du cep, des bois à éliminer par les organes de la machine.

Il a été tenté de mécaniser cette seconde opération de post-taillage, par un dispositif enjambeur composé de rouleaux verticaux relevant et écartant les seuls fils releveurs supérieur en les écartant de la végétation (brevet FR 94.05336). Un système de courroies ou chaînes enjambe et comprime le rang de vigne et la végétation, aussi bien les bois conservés sur le cep, que ceux qu'il faut éliminer. Un mécanisme d'extraction est censé séparer les deux masses par deux rouleaux horizontaux, enserrant les bois grâce à des ressorts et tournant vers le haut. Il agit à la manière d'un engrenage mettant en friction indifféremment les bois de taille à garder et les nombreux sarments qu'il doit extraire, que le tailleur a dû couper et détacher un par un à la base de la flèche ancienne, afin qu'ils puissent être entraînés. Cette machine agit donc dans la totalité de la masse végétative, sans la relever.

Elle opère de part et d'autre de la rangée qu'elle enjambe par une sorte d'effet de peigne vertical sur l'ensemble des bois de manière à ce que les flèches solidaires du cep conservées par le tailleur résistent à la friction des rouleaux extracteurs destinés à engrèner grâce à leurs aspérités, les sarments coupés. Cette machine, par ses organes d'extraction crantés et comprimés, est en contact total avec les bois de taille fructifères, aussi bien qu'avec les autres.

A l'inverse du prétaillage qui s'effectue en amont et est imparfait, la présente invention a pour objectif de mécaniser la seconde opération de post taillage à la suite de la séparation des sarments à éliminer du pied.
L'invention vise à réaliser cette opération de manière telle que le pied de vigne et la flèche fructifère soient respectés.

La présente machine à tailler notamment la vigne palissée, comporte selon l'invention un châssis adapté, soit à un tracteur interligne, soit à une automotrice enjambant la rangée et qui peut être soulevé et abaissé par un dispositif de relevage propre à l'engin qui le porte ou bien intégré au châssis lui-même, tel qu'un vérin hydraulique.
Un système de coulissement latéral propre au châssis et préférentiellement à crémaillère ou à parallélogramme déformable actionné par un vérin, coopère avec le dispositif de relevage, ce qui permet aux organes de soulever et de déporter plus ou moins à l'intérieur tous les bois détachés du cep par le tailleur et emprisonnés dans les fils.
Ce mécanisme peut se situer au niveau du poste de conduite, le chauffeur l'actionnant directement.
Le coulissement latéral permet aussi à la machine d'opérer tant sur la droite que sur la gauche de la rangée selon le côté où est situé le fil porteur afin que la machine puisse le déporter à l'intérieur de la rangée, soit à l'aller, soit au retour. Le fil porteur est dissocié des tuteurs et écarté du rang de vigne concerné et dans l'interligne, il est levé au centre et sous la machine par deux rouleaux crantés et entraînés qui se referment sur lui pour le contraindre à défiler sous et derrière la machine après qu'il ait été débarrassé des débris de bois encore enroulés par deux rouleaux munis de couteaux. Le ou les fils releveurs sont conduits par des guides ayant la forme de perche double en V pivotant de bas en haut pour les saisir afin de les conduire dans une poulie à gorge ou glissière à hauteur réglable située sur les flancs de la machine altenativement d'un côté ou de l'autre contigu à la rangée de la vigne. '
Soulevé par la machine hors de la végétation préalablement taillée, il entraîne dans son mouvement ascendant en phase avec celui du fil porteur les bois à éliminer au niveau du bloc engreneur jusqu'à ce que ce dernier tire les bois à la base et les sépare ainsi que les vrilles qui les retiennent du fil releveur qui défile au fur et à mesure entre le flanc de la machine sur lequel il glisse et la rangée.

Le relevage à la verticale conjugué au déport latéral de la machine avec ses guides, poulies et supports, ont pour effet de soulever et de déporter le fil porteur engagé dans les rouleaux et le (ou les) fils releveurs engagés dans la poulie (ou glissière) et avec eux la masse des bois à éliminer détachés du cep. Ils sont extraits par élévation et traction vers l'intérieur de la rangée de la partie des bois de taille qui ont été conservés sur le cep par le vigneron. Ces derniers se trouvent donc d'un coup totalement dégagés par simple séparation des bois superflus, sans qu'aucun organe mécanique susceptible de leur nuire n'ait été en contact avec eux tandis que les organes de la machine vont prendre en compte les bois à éliminer.

A cet effet, le procédé selon l'invention permettant de dégager des fils de palissage les bois de la vigne taillés sur le pied et d'éliminer les bois non taillés se caractérise essentiellement en ce qu'il consiste à lever vers le haut en phase avec le mouvement du fil porteur le ou les fils releveurs détachés des tuteurs, à dégager le fil porteur du rang des tuteurs, à l'écarter latéralement par rapport à sa rangée, dans l'interligne des rangs de vigne et à dégager les bois des fils par passage du fil porteur entre des organes élévateurs séparateurs et vers un dispositif engreneur et un dispositif broyeur et/ou déchiqueteur portés par une machine automotrice enjambant les rangs de vigne ou par une machine interligne.

La machine selon la revendication 2 mette en oeuvre le procédé de l'invention.

Les buts, caractéristiques et avantages ci-dessus et d'autres encore ressortiront mieux de la description qui suit et des dessins annexés, dans lesquels :
- la figure 1 représente schématiquement un rang de vigne vu de côté ;
- la figure 2 représente schématiquement en vue de dessus une machine selon l'invention en position de travail entre deux rangs de vigne ;
- la figure 3 représente vue en coupe schématique une machine selon un premier mode de réalisation ;
- la figure 4 est une vue de détail d'organes de la machine selon la figure 3, en l'espèce les rouleaux élévateurs ;
- la figure 5 est une vue en coupe verticale de la machine selon la figure 3 ;
- la figure 6 est une vue en plan (vue d'en haut) de la machine selon la figure 3 ;
- la figure 7 est une vue partielle du système de traitement des bois selon la machine de la figure 3 ;
- la figure 8 est une vue en plan d'un jeu de deux chenilles d'extraction des bois adaptable à la machine selon l'invention ;
- la figure 9 est une vue en coupe longitudinale de la machine selon l'invention suivant une autre forme de réalisation de l'invention ;
- la figure 10 est une vue de la machine selon l'invention suivant une autre forme de réalisation de l'invention ;
- la figure 11 est une vue partielle selon la flèche G1 de la figure 10 ;
- la figure 12 représente en vue de dessus le bloc engreneur.

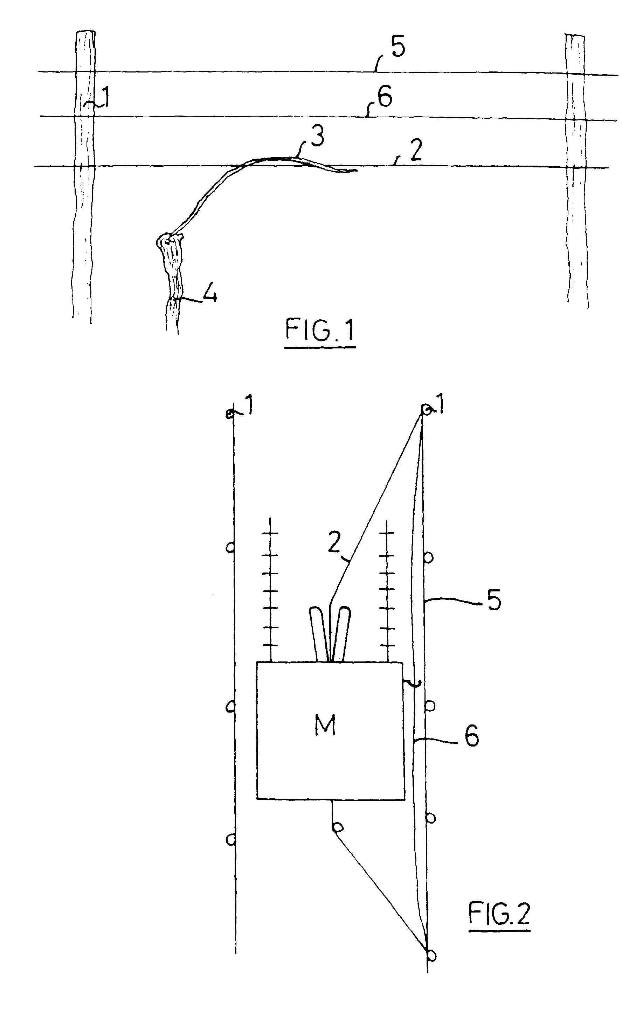

En figure 1 est représenté de manière schématique un rang de vigne palissé et comportant sur des tuteurs 1 des fils, soit au moins un fil porteur 2 qui reçoit la flèche fructifère 3 du pied de vigne 4, au moins un fil releveur 6 au-dessus du fil porteur 2 et un fil supérieur au sommet des tuteurs.
Le ou les fils releveurs 6 reçoivent les bois générés par la flèche 3.
Les fils porteurs et releveurs sont fixés par des pointes en biais clouées dans le tuteur qui leur servent de support et dont ils peuvent se dégager.

Dans l'exemple de la figure 1, la flèche 3 est la flèche nouvelle, le bois et la flèche ancienne étant considérés comme ayant été enlevés.
La taille est effectuée en sorte de séparer les bois et la flèche ancienne du cep pour permettre de ne garder que la flèche 3 nouvelle.

Les bois et la flèche ancienne sont fixés aux fils porteurs 2 et aux fils releveurs 6 essentiellement. Cette fixation qui se fait par enroulement des sarments autour des fils est plus ou moins solide et la quantité de bois est plus ou moins importante en fonction de l'age et de la qualité du pied.

Lors de la taille, ces bois restent pendus ou accrochés aux fils de palissage. Les fils de palissage notamment le ou les fils releveurs 6 et le ou les fils porteurs 2 sont fixés aux tuteurs 1 de manière à pouvoir en être détachés, soit par des clous sans tête inclinés, tuteurs en bois, soit par des crochets ouverts.

L'invention met en oeuvre un procédé nouveau qui consiste à lever vers le haut le ou les fils releveurs 6 détachés des tuteurs, à dégager le fil porteur 2 du rang de tuteur, à l'écarter latéralement par rapport à sa rangée dans l'interligne des rangs de vigne, comme représenté en figure 2, ce qui a pour effet d'écarter les bois des pieds de vigne, à dégager les bois, dont l'ancienne flèche du fil porteur, cette opération s'effectuant par passage du dit fil porteur entre des organes élévateurs séparateurs qui évacuent les bois vers un éventuel dispositif engreneur, extracteur et/ou déchiqueteur, ledit fil porteur étant guidé à travers la machine comprenant les dits dispositifs associés à des dispositifs de nettoyage du fil porteur par sectionnement des bois qui y sont enroulés.

En figure 2, la machine est schématisée par le repère M. Après mise en oeuvre de ce procédé, le fil porteur 2 et le fil releveur 6 sont remis en place manuellement.

La machine selon une première forme de réalisation est représentée aux figures principales 3, 5 et 6. Cette machine comprend une organisation en différents ensembles définis par leur fonction :
- un ensemble élévateur séparateur A ;
- un ensemble releveur B ;
- un ensemble engreneur C éventuel ;
- un ensemble extracteur D éventuel ;
- un ensemble déchiqueteur E.
Ces ensembles désignés par les lettres A, B, C, D et E et dont les organes sont désignés plus loin par des chiffres, sont portés par un châssis adapté soit à un tracteur interligne, soit à une automotrice enjambant le rang de vigne.

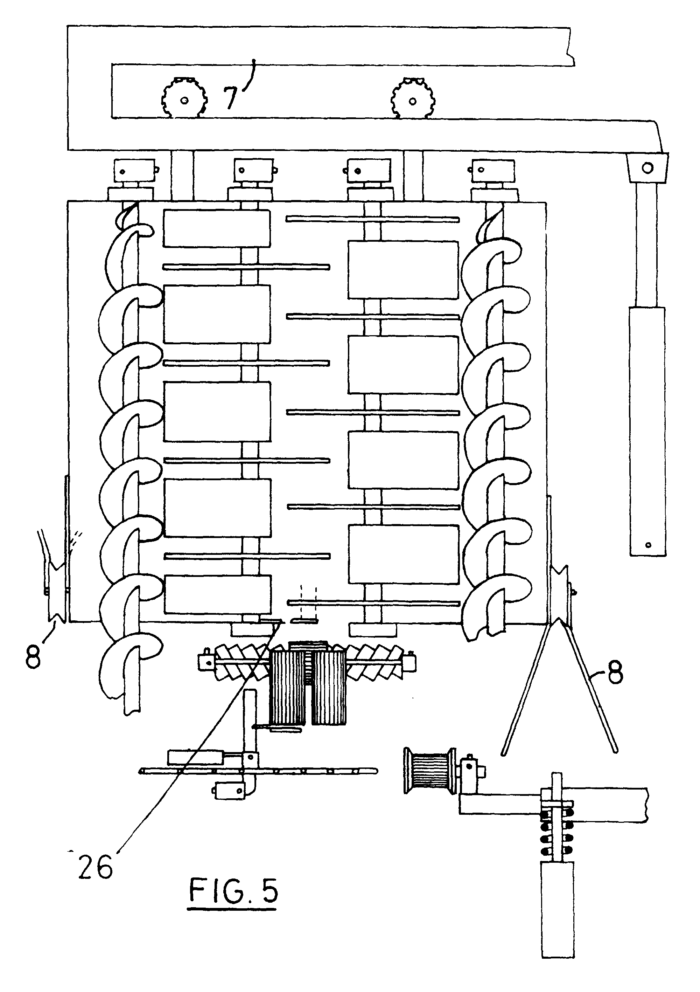

Le châssis porteur des dits ensembles peut être soulevé et/ou abaissé par un dispositif propre au véhicule porteur ou qui est intégré au dit châssis tel qu'un système à vérin hydraulique comme représenté en figure 5. Un système de coulissement latéral propre au châssis et préférentiellement à crémaillère 7 coopère avec l'ensemble élévateur séparateur A.

L'ensemble élévateur séparateur A comprend un guide 8 latéral à la machine sur et dans lequel coulisse le fil releveur 6 qui y est positionné.

Préférentiellement, la machine comprend un guide 8 de chaque côté, chacun d'eux pouvant être réglable en hauteur et position.

L'ensemble A comprend également deux systèmes élévateurs 9 inclinés de chaque côté de la machine constituée par deux vis sans fin actionnées en rotation. De préférence, les vis 9 tournent en sens opposé et toutes deux vers l'axe médian de la machine.
Cet ensemble permet de soulever et de porter plus ou moins à l'intérieur du rang tous les bois détachés du pied de vigne par le tailleur et tenu par ou dans les fils de palissage.

L'ensemble A élévateur séparateur qui élève le fil 6 et les bois et les sépare des fils 6 et 2, coopère avec l'ensemble releveur B qui a pour fonction d'écarter le fil porteur 2 du pied et inversement et de relever ledit fil porteur 2.
Cet ensemble B comprend un jeu de rouleaux horizontaux 10 et un jeu de rouleaux verticaux 11 disposés sous la machine et entre lesquels passe le fil porteur 2.

A cet effet, ces rouleaux sont susceptibles pour chaque paire 10/11 de s'écarter l'un de l'autre pour permettre manuellement ou mécaniquement la mise en place du fil porteur 2.
L'ensemble B comprend également latéralement à la machine et sous les vis sans fin 9 des organes d'écartement du pied qui seront décrits plus loin.

Les vis sans fin 9 qui peuvent être remplacés par des chaînes ou des disques relèvent les sarments épars en les séparant notamment de la flèche taillée à conserver sur le pied.

Suivant une autre forme de réalisation, deux rouleaux cylindriques crantés seront suffisamment élargis de sorte que le fil porteur 2 puisse naviguer latéralement notamment pour son recentrage aisé à l'aide de préférence d'une vis sans fin prolongeant de part et d'autre le rouleau inférieur et d'une perche pilotée de saisie du fil porteur. Les sarments sont engrènés par des doigts 12 de deux hérissons qui, faisant partie de l'ensemble C, s'effacent par le moyen de déflecteur 13 pour les libérer.

Deux tambours concentriques (14-15) faisant partie de l'ensemble D, sectionnent à la base les sarments et les entraînent en rotation vers la trappe arrière 16 où ils sont extraits au moyen de doigts 17.

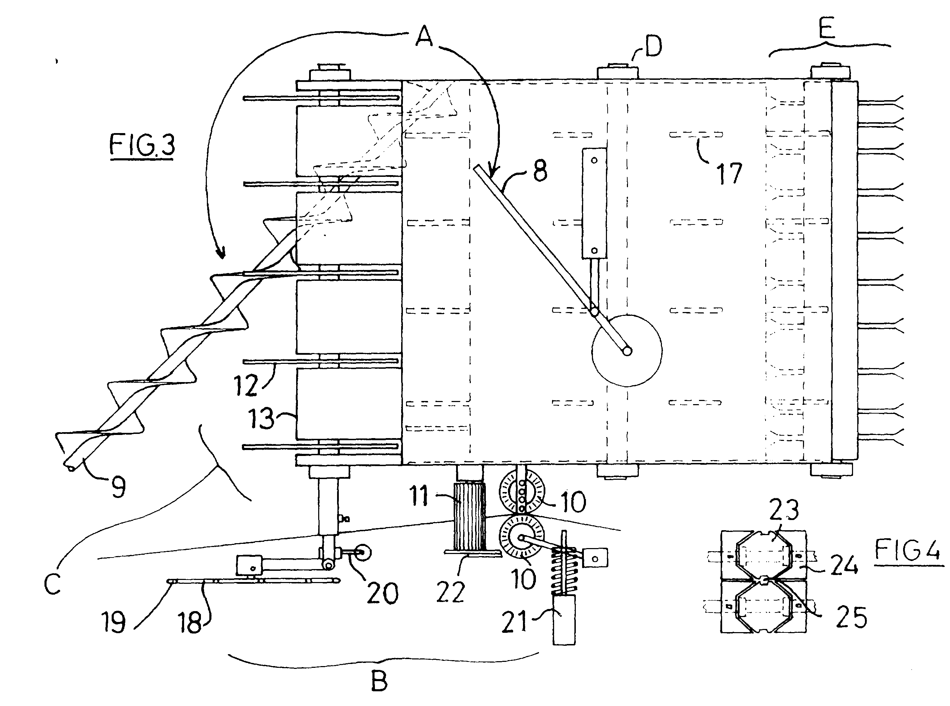

Selon la figure 3, le bloc élévateur séparateur des sarments du fil porteur fixé sous le tambour légèrement en arrière de l'aplomb du système de coupe 3 est constitué de deux rouleaux verticaux 11 et deux rouleaux horizontaux 10 animés d'un mouvement de rotation, entraînant vers l'arrière au fur et à mesure de l'avancement de la machine le fil porteur ainsi que les bois résiduels qui défilent sous le tambour. Les deux rouleaux verticaux crantés 11 maintiennent en compression à l'aide de ressorts le fil porteur selon un axe longitudinal. Ils peuvent s'effacer au passage de bois résiduels qu'ils aident à passer grâce à leur mouvement d'engrenage et s'ouvrent indépendamment grâce à un système de bascule pour emprisonner ou libérer le fil dans les manoeuvres.
Pour un meilleur guidage en tout sens du fil porteur, un deuxième bloc similaire mais composé d'un seul rouleau 50 et d'un dispositif de coupe 51 peut être monté, équipé d'une vis sans fin droite 502 gauche 501 à pas inversés de recentrage du fil, devant les rouleaux de la machine à l'avant du premier afin de soutenir la végétation à l'entrée du canal et l'empêcher en cas de fléchissement de sortir des rouleaux 11 et d'atteindre les organes de coupe 43-44.

Le bloc élévateur séparateur comprend un mécanisme avancé de sauvegarde des flèches constitué de deux disques horizontaux tangents 18 tournant en sens inverse vers l'extérieur et positionnés en partie basse de la machine. Des doigts souples 19 fixés en périphérie écartent dans leur mouvement la flèche qui se trouverait de par sa position, sa longueur ou l'abaissement de la machine à la portée des organes mécaniques.
Ce dispositif réglable en tout sens est muni d'un système d'écartement et de fermeture de type connu (20) qui autorise le passage du fil porteur vers les rouleaux de positionnement. Il permet aussi de réduire dans une certaine mesure l'élévation et le déport de l'appareil.
Les deux rouleaux horizontaux sont également crantés et animés. Le rouleau supérieur mobile situé au-dessus du fil porteur règle en hauteur la distance entre l'étage inférieur des tambours (14-15) et le fil porteur afin que les organes de coupe n'entrent pas en contact avec ce dernier. Il comporte une partie centrale crantée et deux vis sans fin latérales à pas inversé qui ramènent au centre le fil porteur dérivant à droite ou à gauche lors de la manoeuvre de saisie.
Le rouleau inférieur en forme de jante à base creuse épousant celle du rouleau supérieur est sollicité par deux mécanismes. L'un à mouvement horizontal permet au rouleau en effacement dans la figure, de s'engager sous le fil porteur pour le positionner dans le creux de la jante ; l'autre mécanisme 21 à mouvement vertical relève le rouleau creux et le fil engagé contre le rouleau supérieur, le positionnant selon un plan horizontal et le libère en bout de rangée par manoeuvre inverse.

Ce dispositif élévateur coopère avec les guides 8 fixés au carter de la machine ou au niveau du poste de conduite du chauffeur qui reçoivent le fil releveur 6 pour dégager de la souche la masse des bois à éliminer en les relevant. Chacun des rouleaux crantés est animé d'un mouvement de rotation inverse entraînant vers l'arrière le fil porteur. L'un au moins des rouleaux comporte un système élastique, ressort ou autre 21 lui permettant de s'effacer partiellement autorisant ainsi le passage de bois résiduels adhérant au fil. Sous les rouleaux, un second mécanisme de coupe réglable en hauteur par rapport au fil porteur en position est de préférence constitué d'un élément court de barre de coupe animé d'un mouvement de va et vient qui sectionne les bois retombants. A ce système peut avantageusement être substituée une scie circulaire ou encore un étage 22 de couteaux en étoile et de contre-couteaux fixés à la base de l'un des rouleaux verticaux.

Cela est particulièrement indiqué dans le cas où la flèche est pliée en arcure et libère donc aisément dés la taille le fil porteur de tout bois résiduel.

Suivant encore un autre mode de réalisation (fig.4), une paire de rouleaux superposés en friction disposés à l'horizontale perpendiculairement au fil porteur se substituent aux deux rouleaux horizontaux précédents. Ils sont sollicités comme eux par deux mécanismes, l'un à mouvement horizontal permettant au rouleau inférieur en effacement de s'engager sous le fil porteur et l'autre à mouvement vertical, pour emprisonner le fil porteur. Leur positionnement sous le tambour et derrière les deux rouleaux crantés verticaux est identique, ainsi que le système de réglage en hauteur positionnant le fil porteur par rapport au système de coupe du tambour. L'arbre de chaque rouleau comporte trois éléments dont l'un central 23 monté libre et deux latéraux 24 clavetés sur un arbre de part et d'autre de l'élément libre. L'élément central de forme tronconique est équipé de deux roulements enfilés librement sur l'arbre et comporte une gorge semi-circulaire 25 fraisée sur la périphérie au centre du rouleau.

De part et d'autre de l'élément central monté en roue libre, les deux éléments 24 de forme tronconique, inverse à celle de l'élément central leur permettant de l'épouser, sont équipés en pourtour de couteaux longitudinaux à tranchant incliné, du type raboteuse et qui peuvent coulisser par réglage à une certaine distance de la gorge centrale. En fonctionnement, le rouleau inférieur effacé est glissé sous le fil porteur et relevé de manière à l'emprisonner entre les deux gorges formant ainsi canal.

Lorsque les deux arbres sont mis en rotation rapide inverse, les deux éléments centraux étant montés "libres" restent inertes sur l'arbre et permettent au fil porteur de défiler à l'arrière de la machine en avancement. Par contre, les quatre éléments clavetés porteurs de couteaux sont entraînés à vitesse rapide en sens inverse du déroulement du fil et déchiquètent tout autour du fil, les bois résiduels dont ils le nettoient lui permettant ainsi de glisser librement dans le canal. Le réglage latéral des couteaux permet de passer au plus près du fil sans l'endommager.

Selon les catégories diverses des bois, cassants ou souples, gros ou fins, les couteaux longitudinaux du type "raboteuse" seront remplacés avantageusement par un certain nombre de couteaux radiaux du type section de faucheuses ou similaire à double tranchant.
Le sens de rotation de chacun des rouleaux pourra être inversé de manière soit à refouler, soit à engrèner, soit à sectionner à volonté les bois selon leurs caractéristiques, à une vitesse adaptée.

Préférentiellement, les pignons seront entraînés par une chaîne permettant l'inversion ou la mise en phase du sens de rotation des deux trains de pignon ainsi que leur angle de calage pour obtenir en ce cas un effet de cisaillement des bois résiduels situés sur le fil porteur se glissant entre les couteaux.

Ce système est conçu pour les flèches enroulées à plat sur le fil porteur alors que la formule décrite précédemment est adaptée aux flèches en arcure et non enroulées qui se détachent d'elles-mêmes. Après le passage de la machine, les fils soulevés sont relâchés et seront ensuite normalement manipulés et remis en place sans passage complémentaire, le vigneron devant toujours les placer près du sol avant la pousse. Les trois mouvements des trois dispositifs décrits, soit les deux disques de sauvegarde 18, les rouleaux verticaux 11 et les horizontaux 10 sont synchronisés par souci de simplification et surtout pour permettre au fil porteur simultanément de franchir la zone de sauvegarde et de prendre position en tous sens par l'effet de tenaille de l'ensemble.

Selon un mode préféré de réalisation, l'élément élévateur de la machine est constitué d'une paire de vis sans fin 9 à pas inversé situées de part et d'autre des bois soulevés par la machine et plongeant à 45° environ au-dessous de la masse végétative qu'elles redressent afin qu'aucun sarment n'échappe.

La vis sans fin a un double rôle d'élévation et de séparation. Son inclinaison lui permet en plongeant de relever la masse des bois en les engouffrant dans le canal engreneur. Elle joue aussi le rôle essentiel de séparation de cette masse de la flèche préalablement taillée et solidaire du cep de vigne.
En effet, celle-ci se trouve soit le plus souvent à l'intérieur mais parfois à l'extérieur du fil porteur reposant sur la pointe. Lorsque ce fil est relevé et déporté par le mécanisme vers l'intérieur du bloc engreneur, la flèche taillée à conserver se trouve en ce cas plus ou moins couchée latéralement vers la machine et glisse donc sous le fil porteur qui se déporte. La vis sans fin s'interpose alors entre le fil et la flèche et ramène celle-ci à l'aplomb du rang de vigne, l'éloignant à la fois de la masse des bois à éliminer et du mécanisme engreneur.

Elles peuvent être remplacées selon un autre mode de réalisation par deux chaînes ou courroies équipées de doigts souples dont le mouvement ascendant selon un angle identique a pour résultat de relever également les bois retombés. Selon un autre dispositif, deux disques rotatifs équipés en périphérie d'ergots souples perpendiculaires sont montés de part et d'autre à la verticale selon un certain angle d'ouverture réglable de manière à rassembler et redresser les sarments.

Suivant une caractéristique de l'invention, l'élément C engreneur est constitué d'une paire de rouleaux du type "hérissons" situés verticalement de part et d'autre, immédiatement à la suite des vis sans fin et tournant à vitesse linéaire en sens inverse à la manière d'un engrenage.
Ils comportent plusieurs étages de doigts 12 qui se croisent et happent à l'avancement de la machine et sur toute leur hauteur les sarments qu'ils engrènent. Deux séries de déflecteurs fixes 13, intercalés entre les étages de doigts sont excentrés par rapport à l'axe de rotation de façon à permettre aux sarments de glisser sans s'enrouler découvrant les doigts à l'entrée des hérissons pour les effacer à l'arrière, l'extrémité des doigts les libérant ainsi à l'arrière.
L'arbre de l'un des rouleaux est décalé vers l'arrière de telle sorte que les doigts croisent en traversant le tambour carter lui-même ajouré, ceux du tambour rotatif 17 obligeant ainsi le transfert des sarments du bloc engreneur vers le bloc extracteur par engrènement et dégagement progressif sur les déflecteurs en fuite. Ce dispositif s'apparente à celui qui équipe la plupart des presses à fourrage : les rangées de doigts du hérisson happent les pailles au sol et s'effacent progressivement en s'élevant derrière un carter ajouré permettant le libre passage des rangées de doigts qui s'effacent progressivement derrière les tôles.

Suivant l'invention, l'ensemble D extracteur est constitué de deux tambours concentriques, l'un fixe, l'autre rotatif. Le tambour vertical fixe 14 formant carter est fermé au sommet afin d'emprisonner les sarments qu'il reçoit ainsi qu'à la base à l'exception d'une ouverture selon un certain angle et qui reçoit un contre-couteau. Une trappe d'ouverture est aménagée à l'avant sur toute la hauteur du tambour carter qui affleure l'extrémité des doigts des hérissons afin de recevoir les sarments libérés. Ce tambour carter fixe qui comporte également une ouverture à l'arrière en forme de trappe 16 permettant l'éjection des sarments reçoit à l'intérieur un deuxième tambour concentrique rotatif 15 de plus petit diamètre à arbre vertical et qui comporte plusieurs étages, l'un de couteaux à la base, les autres constitués jusqu'à la partie supérieure, préférentiellement de doigts inclinés en fuite dans le sens de rotation.
Ils entraînent les sarments vers l'arrière dans un mouvement circulaire dont la vitesse linéaire est assez nettement supérieure à celle des hérissons pour happer les bois et les dégager rapidement.

Selon un mode de réalisation préféré (fig. 5), ce tambour rotatif comporte à l'étage inférieur une série de couteaux radiaux 26 disposés en étoile. Dans leur mouvement rotatif, ils sectionnent à la base les sarments engoufrés ayant poussé sur l'ancienne flèche qui viennent buter sur le contre-couteau fixé sur le bord de l'ouverture inférieure pratiqués dans le tambour carter et dont l'effet conjugué est de les séparer de la flèche ancienne supportés par le fil porteur.

Suivant une autre forme de réalisation, une lame de scie circulaire à vitesse rapide ou encore un élément de barre de coupe du type élagueuse animée d'un mouvement de va et vient sont disposés à l'horizontale à la base des hérissons au niveau de la trappe du tambour pour obtenir un résultat identique. Aussitôt sectionnés et séparés de l'ancienne flèche arquée ou enroulée sur le fil porteur qui est maintenu par des rouleaux sensiblement à l'aplomb des couteaux hors de leur portée, les sarments sont happés rapidement par les doigts du tambour rotatif. Ces doigts inclinés 17 en angle de fuite les entraînent dans un mouvement périphérique vers l'arrière du tambour carter où se situe la trappe d'évacuation 16. Une rangée de plaques formant grille dont une extrémité est fixée sur le bord de la trappe s'intercale entre les étages de doigts solidaires du tambour moteur, l'autre extrémité libre tangentielle venant en friction contre la paroi du tambour rotatif de telle sorte que les sarments entraînés par les doigts inclinés en angle de fuite arrivent sur les plaques de la grille tangente, glissent progressivement vers la périphérie et soient en fin de parcours éjectés à l'extrémité des plaques formant grille sur le bord de la trappe.

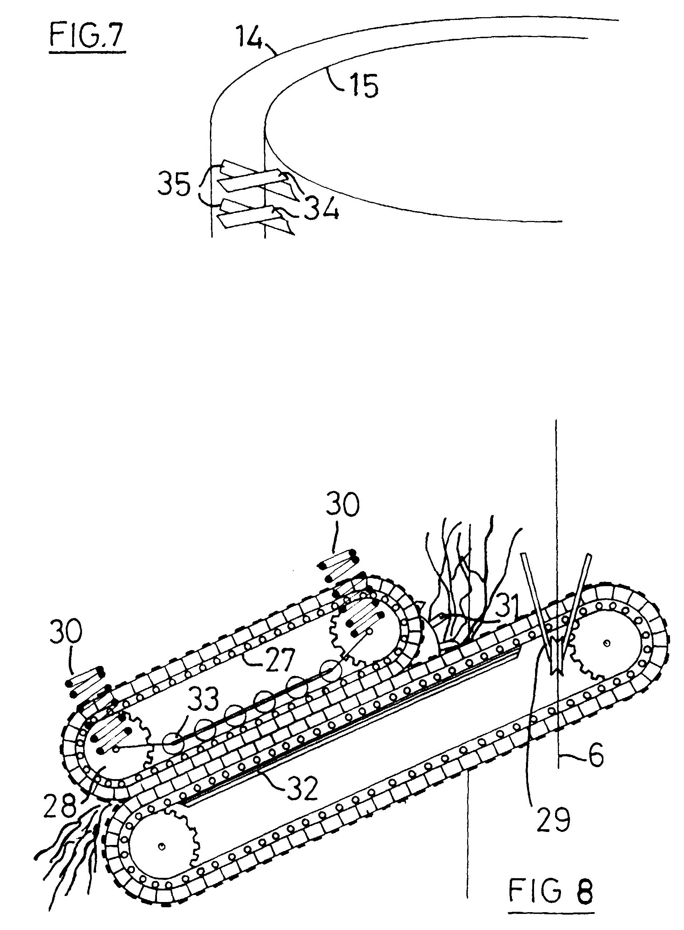

Selon un autre mode de réalisation simplifiée de l'invention (figure 8) adaptée à des vignes à faible végétation, les hérissons et les tambours d'extraction sont remplacés par un dispositif horizontal constitué d'un ou plusieurs éléments superposés parallèles, chaînes ou courroies, de longueur différente, montés en chenille l'un contre l'autre.

Préférentiellement, chaque élément est constitué d'une chaîne à rouleaux 27 montée entre deux pignons dont l'un 28 interne est moteur. Chaque maillon comporte des ailettes sur lesquelles est fixé un tassot de caoutchouc cranté ou de toute autre matière souple, de telle sorte que chacun d'eux est au contact du précédent et articulé pour former une sorte de chenille dont la partie avant en rotation fait mouvement vers l'intérieur de la rangée. A ce niveau, une perche en V 29 soulève le fil releveur 6 qu'elle maintient hors de la zone d'extraction des bois. La chenille arrière, la plus longue, capte et dérive les sarments selon un certain angle vers la chenille avant plus courte maintenue en compression contre l'autre à l'aide de ressorts 30 ou de tout autre moyen de pression. Une série de couteaux 31 ou encore une scie ou lame sectionne à la base les sarments les séparant ainsi de l'ancienne flèche enroulée sur le fil porteur à l'instant où les deux chenilles les pincent entre les tassots de caoutchouc qui les relâchent à l'autre extrémité ou les livrent à un broyeur conventionnel.

Les faces internes de chaque chenille sont soutenues du côté du canal de pincement par des glissières du genre ertalon 32 ou par des galets multiples 33 empêchant la chenille de flèchir sous la pression des sarments pincés.

Selon une autre variante de réalisation, les chaînes à rouleaux et leurs éléments souples sont remplacés par des courroies sans fin en caoutchouc par exemple trapézoïdales et crantées au moins sur leur face externe, de manière à entraîner les sarments par pincement des deux faces en vis à vis.
Les faces internes de chaque courroie sont soutenues du côté canal par des poulies ou galets multiples maintenant une pression uniforme sur toute la longueur et une efficacité de pincement plus ou moins efficace selon la pression exercée sur au moins l'un des éléments.

Après l'élément élévateur, l'élément releveur, l'élément engreneur et l'élément extracteur qui viennent d'être décrits, un dernier élément, l'élément déchiqueteur est solidaire des quatre autres ; il est représenté schématiquement en figure 7.

Selon un mode de réalisation préféré de l'invention, les doigts inclinés en angle de fuite 17 sont remplacés sur le tambour concentrique rotatif central 15 par des couteaux 34 positionnés perpendiculairement à l'axe du tambour et en étoile par étages superposés à une certaine distance les uns des autres qui définit le degré de finesse du broyage des sarments.

La grille de sortie solidaire du tambour carter fixe 14 est constituée d'une rangée de contre-couteaux 35 s'intercalant entre les étages de couteaux et qui sont échancrés afin de retenir les sarments et les empêcher de glisser.

L'angle que forment les couteaux rotatifs et les contre-couteaux fixes est calculé de telle sorte qu'il ait un effet de ciseau sur les sarments ainsi sectionnés en menus morceaux à la sortie.

Ce mode de réalisation à couteaux mobiles sur grille fixe reprend le principe connu des broyeurs viticoles à arbre horizontal.

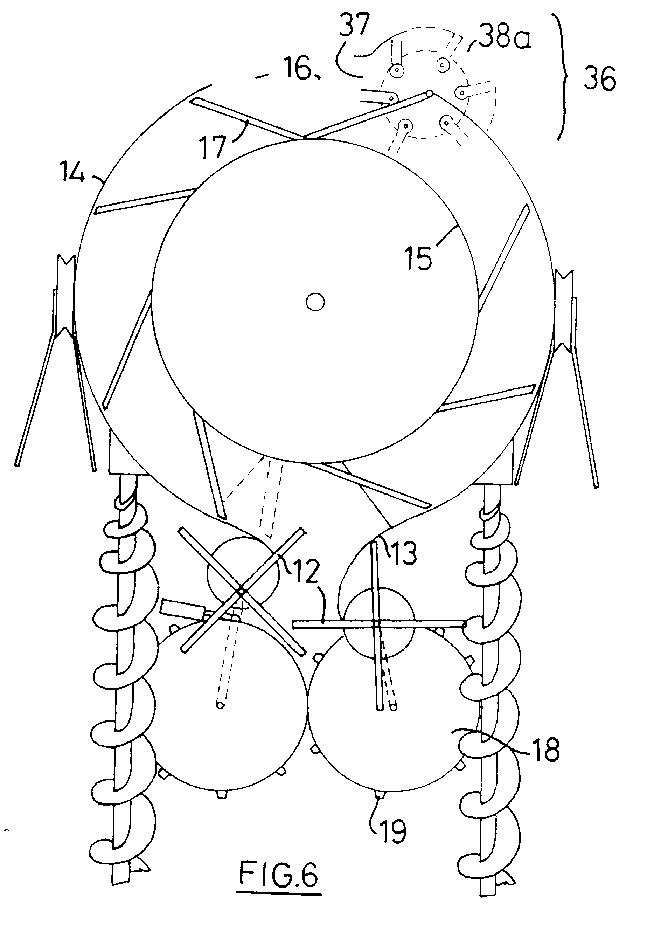

Selon un mode de réalisation représenté en figure 6, emprunté aux broyeurs à paille connus, le tambour rotatif est complèté par un broyeur 36 dont l'arbre rotatif est monté à la verticale de la trappe d'évacuation. Il comporte plusieurs étages de marteaux articulés 37 entraînés à vitesse élevée en affleurement d'une ouverture 38a d'évacuation des déchets.

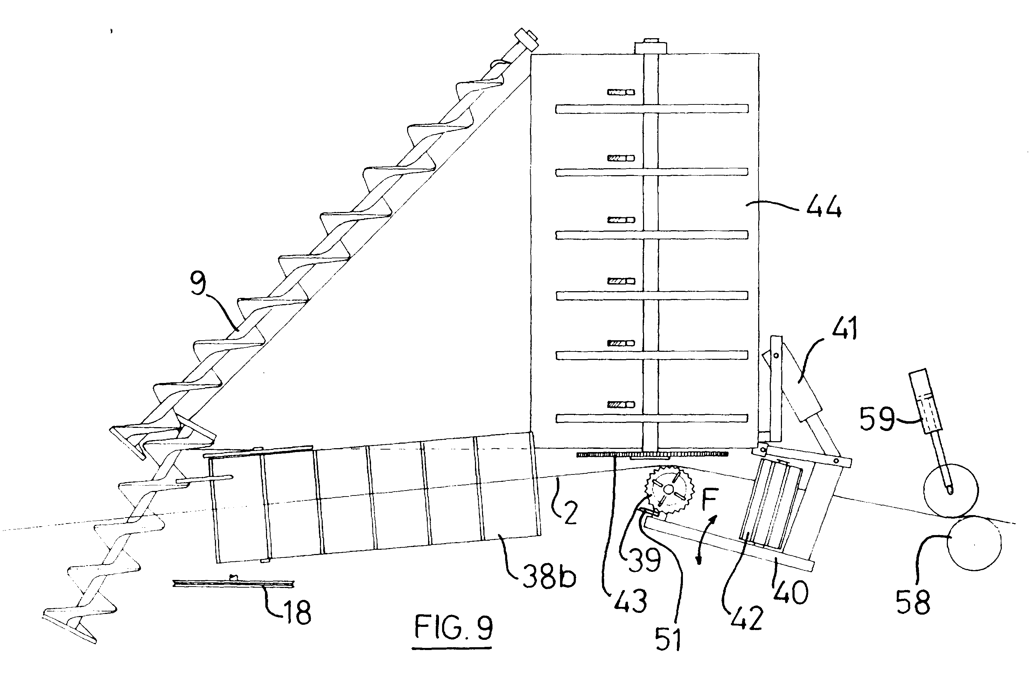

En figure 9 est représentée une autre forme de réalisation de la machine selon l'invention vue en coupe longitudinale.
Sur cette vue sont représentées les vis 9 sans fin inlinées de relevage des bois.
La position et notamment l'inclinaison des vis qui sont disposées de part et d'autre à l'avant de la machine comme dans les figures précédentes (figure 6) sont réglables angulairement par tous moyens adaptés connus de l'homme de l'art telles qu'articulation à leur sommet et pattes de fixation multipositions à leur base.

Sous les vis sans fin inclinées sont placées en position médiane deux chenilles 38b parallèles constituées de deux tapis montés sur tambours rotatifs dont un moteur par tous moyens connus.
Elles sont de préférence ouvertes par écartement entre elles vers l'avant et reserrées vers l'arrière et définissant un canal dans lequel passe le fil porteur 2.

A l'avant de chaque chenille et sous l'extrémité avant de chaque vis est montée une roue sensiblement horizontale dont la périphérie est extérieure aux chenilles et tangeante au rang de ceps de vigne qui a pour action de protéger le cep au pied de vigne et la flèche qu'il porte et qui doit être conservée en les écartant de la zone d'action de la vis sans fin correspondante.

A l'arrière des chenilles au débouché du canal qu'elles forment est disposé un rouleau horizontal rotatif 39 qui relève le fil porteur.
Ce rouleau 39 est monté sur un bâti articulé 40 commandé par un vérin 41 ou tout autre moyen qui permet de le faire basculer selon la flèche F d'une position de fermeture telle que représentée à une position d'ouverture par abaissement, ce qui permet la mise en place du fil porteur 2.

Sur le bâti mobile 40 est monté un rouleau vertical 42 librement rotatif qui sert au guidage du fil.
Au débouché du canal entre les chenilles 38 et au-dessus du rouleau mobile 39 est monté un organe de coupe 43 actionné par tout moyen connu qui va sectionner les bois enroulés sur le fil 2 ou portés par lui.

Le rouleau 39 en position de fermeture (figure 9) fait passer le fil à proximité de l'organe de coupe 43. Avantageusement, l'organe de coupe 43 peut être une lame de scie circulaire actionnée en rotation par tout moyen connu transversalement au sens de défilement du fil dans la machine ou d'avancement de la machine sur le fil.
L'organe de coupe peut également être une barre de coupe ou tout autre moyen adapté.

Au débouché du canal des chenilles 38 est disposé un broyeur à rotation rapide 44 actionné par tous moyens connus, disposé verticalement ouvert vers l'avant et vers l'arrière et qui reçoit les bois apportés par les vis et les chenilles pour les déchiqueter.
Avantageusement, la scie circulaire 43 est montée sur l'axe du broyeur.

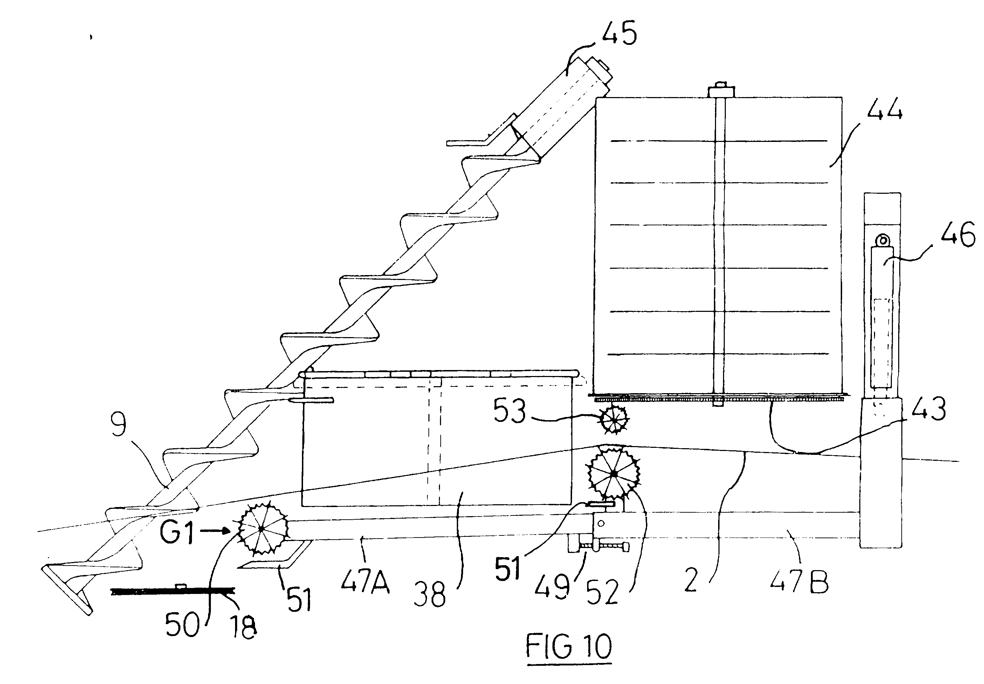

En figure 10 est représentée vue en coupe une autre forme de réalisation de la machine selon l'invention.
Elle comprend les vis sans fin 9, une sur chaque côté. De préférence, dans ce mode de réalisation, chaque vis est unitaire.
La vis sans fin est équipée dans la partie haute d'un organe 45 de cisaillement des bois.
Cet organe 45 est constitué d'une bague disposée au voisinage de l'extrémité supérieure de la vis.

L'alésage interne de la bague est légèrement supérieur au diamètre de la vis qui tourne dans ladite bague, ce qui produit contre l'arête vive de la bague un cisaillement de sarments qui atteignent cette partie.
Avantageusement, la bague peut porter une lame fixe 46 formant couteau qui cisaille les sarments.

La machine comprend les chenilles horizontales 38 entre lesquelles passe le fil porteur 2 et à l'arrière et sensiblement au-dessus le broyeur 44 et sous celui-ci, l'organe de coupe constitué par la scie circulaire 43.

Sous les chenilles 38 et l'ensemble de la machine est monté mobile par un système de vérin 46 commandant son coulissement vertical un châssis en deux parties 47A-47B en 48 avec moyen de réglage 49.
Ce châssis s'étend sur la longueur de la machine de l'arrière jusqu'au delà des chenilles 38.
Il porte à son extrémité avant un rouleau 50 transversal sur lequel repose le fil et un organe inférieur au dit rouleau de coupe des bois 51 qui peut être une barre de coupe transversale.

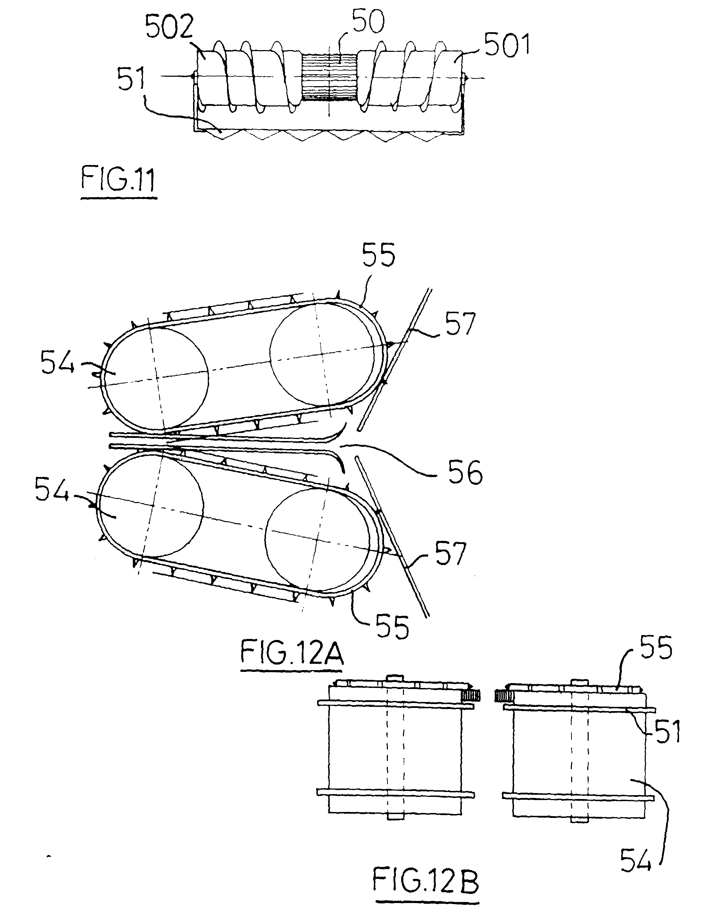

Sur son tronçon arrière 47B, après les chenilles 38, est monté un rouleau transversal 52 support du fil porteur et un contre-rouleau 53.
Le réglage de la position des rouleaux 50-52 par celle du châssis 47A/B permet de régler la tension du fil porteur. Le bloc engreneur représenté en figure 12 selon un autre mode de réalisation est constitué de deux tapis montés souples crantés et tendus entre deux tambours verticaux 54 dont l'un est moteur.
Les deux tapis écartés à l'avant pour absorber la masse des bois sont convergents à l'arrière où deux ressorts ou flexibles réglables les maintiennent à un certain niveau de compression de la végétation. Deux chaînes 55 parallèles à rouleaux sont montées sur pignon 54 à la partie supérieure des tambours et utilement positionnées en avancement par rapport à eux pour engrèner la masse des bois grâce à des ergots e.
Deux glissières 56 parallèles divergeantes à l'avant constituent un canal réglable en largeur se situant sous les chaînes et enserrent à la base les bois engrènés dés l'entrée afin de casser leurs vrilles accrochées dans les fils supérieurs, les empêchant du même coup de s'extraire par le haut du bloc engreneur.

A l'avant des tapis et chaînes sont montés des déflecteurs 57 qui guident les bois et interdisant au fil porteur d'être tiré vers le haut par les sarments enroulés dans les fils de palissage hors des organes d'absorption des bois.

Comme représenté en figure 12B, des couteaux radiaux 51 ou des sections de lame de faucheuse à double tranchant seront placés devant les rouleaux 54 entraînés par les chaînes 55.
Le sens de rotation de chacun des rouleaux 54 pourra être inversé de manière soit à refouler, soit à engrèner, soit à sectionner à volonté les bois selon leurs caractéristiques, à une vitesse adaptée.

Préférentiellement, les pignons seront entraînés par une chaîne permettant l'inversion ou la mise en phase du sens de rotation des deux trains de pignon ainsi que leur angle de calage pour obtenir en ce cas un effet de cisaillement des bois résiduels situés sur le fil porteur se glissant entre les couteaux. Ce système est conçu pour les flèches enroulées à plat sur le fil porteur.

A l'arrière de la machine (fig. 9), un tendeur 58 composé de deux rouleaux (ou poulies à gorge) à bascule reçoit le fil tendeur. Un dispositif de tension, par exemple un vérin 59 ou un contre-poids, préférentiellement piloté par le chauffeur maintient une position correcte du fil porteur, s'il a tendance à se relâcher, en complément du soutien par les rouleaux.

## Revendications

1. Procédé permettant de dégager des fils de palissage les bois de vignes taillés sur le pied et d'éliminer les bois non taillés caractérisé en ce qu'il consiste à lever vers le haut en phase avec le mouvement du fil porteur, le ou les fils releveurs (6) détachés des tuteurs (1), à dégager le fil porteur (2) du rang de tuteurs, à l'écarter latéralement par rapport à sa rangée dans l'interligne des rangs de vigne et à dégager les bois des fils par passage du fil porteur (2) entre des organes élévateurs-séparateurs et vers un dispositif engreneur et un dispositif broyeur et/ou déchiqueteur portés par une machine automotrice enjambant les rangs de vigne ou par une machine interligne.

2. Machine permettant de dégager des fils de palissage les bois taillés et d'éliminer les bois non taillés caractérisée en ce qu'elle comprend:
- au moins un ensemble élévateur-séparateur composé d'au moins un guide (8), latéral à la machine, de relevage du fil releveur (6), de deux systèmes élévateurs inclinés vers le sol, suivant un angle d'environ 45° de chaque coté de la machine,
- au moins un ensemble releveur comportant un rouleau releveur (10) sur lequel passe le fil porteur (2), entre celui-ci et les systèmes élévateurs, et éventuellement
- un ensemble engreneur et un ensemble extracteur qui happent le bois,
- un ensemble déchiqueteur.

3. Machine selon la revendication 2 caractérisée en ce qu'elle comprend une paire de vis sans fin (9) inclinée de part et d'autre de la machine, un jeu de tapis rotatifs (38) entre lesquels passe le fil porteur (2), un rouleau releveur du fil (39) à l'arrière du tapis, un organe de coupe (43) au dessus du fil (2) à l'arrière du tapis et un broyeur (44) au dessus du fil (2) et à l'arrière du tapis (38).

4. Machine selon les revendications 2 et 3 caractérisée en ce qu'elle comprend des vis sans fin inclinées (9), des tapis engreneurs (38) et à l'arrière de ceux-ci un broyeur (44) et qu'elle est dotée d'un châssis (47) coulissant qui porte un rouleau (52) releveur du fil (2) et à l'avant des tapis (38) un rouleau (50), le fil étant tendu entre le rouleau avant (50) et le rouleau arrière (52).

5. Machine selon les revendications 2, 3 et 4 caractérisée en ce que le rouleau releveur du fil (2) est mobile en position.

6. Machine selon la revendication 2 caractérisée en ce qu'elle est constituée d'un châssis (1) sur lequel sont montés des moyens de relevage vertical et de coulissement latéral pouvant traiter tour à tour l'un ou l'autre coté de la rangée comprenant cinq ensembles assemblés constitués par un bloc élévateur-séparateur (A), un ensemble releveur (B), un ensemble engreneur (C), un ensemble extracteur (D) et un ensemble déchiqueteur (E), l'ensemble relevant et entraînant le fil porteur et ou les fils releveurs mobiles de palissage et avec eux la masse de bois à éliminer au dessus et à coté du cep taillé totalement dégagé.

7. Machine selon la revendication 2 caractérisée en ce que le ou les blocs élévateurs- séparateurs (A) sont constitués de deux rouleaux verticaux (10) et de deux horizontaux (11), l'un ou l'autre équipé de vis à pas inversé de recentrage du fil porteur, et le second d'une gorge de réception et support du fil, tous crantés et rotatifs dont le dispositif d'écartement et de resserrement permet le passage, le recentrage, le soulèvement et l'entraînement de la machine en mouvement du fil porteur qui défile.

8. Machine selon la revendication 2 caractérisée en ce que le bloc élévateur-séparateur (A) est équipé à l'avant de deux disques (18) horizontaux de sauvegarde surbaissée et tangents équipés en périphérie de doigts souples qui écartent les flèches dans leur mouvement de rotation inverse vers l'extérieur et dont l'ouverture ou la fermeture pilotée au passage du fil porteur peut être à volonté synchronisée avec celle des rouleaux (10-11).

9. Machine selon la revendication 2 caractérisée en ce que le bloc engreneur (C) est constitué de deux rouleaux verticaux (11) en rotation inverse, hérissés de doigts (12) en étoile étagés entraînant à vitesse linéaire les sarment en glissement progressif sur des déflecteurs intercalés qui permettent aux doigts de s'effacer à l'arrière pour libérer les sarments engrenés à l'entrée du bloc extracteur (D).

10. Machine selon la revendication 2 caractérisée en ce que le bloc extracteur (D) est constitué de deux tambours concentriques (14,15), l'un fixe formant carter, l'autre rotatif sectionnant à la base au moyen de couteaux (26) ou scie ou lame, les sarments ainsi séparés de l'ancienne flèche pour les engouffrer à l'aide de doigts inclinés qui les éjectent par la trappe amère.

11. Machine selon la revendication 2 caractérisée suivant un autre mode en ce que le bloc extracteur (D) est constitué d'au moins un élément comprenant préférentiellement deux chaînes à rouleaux entraînés par des pignons, l'une arrière plus longue s'engageant dans la végétation soulevée, qu'elle capte selon un certain angle de fuite et dérive vers une seconde chaîne avant plus courte formant ensemble engrenage à l'entrée duquel les sarments sectionnés à la base au moyen d'un dispositif de coupe sont pincés entre les tasseaux souples articulés sur les chaînes en compression qui les entraînent vers l'extérieur dans un mouvement linéaire pour les éjecter en direction du bloc déchiqueteur (E).

## Patentansprüche

1. Verfahren zum Lösen des geschnittenen Holzes der Rebstöcke von den Aufbindedrähten und zur Entfernung des nicht geschnittenen Holzes, das darin besteht, phasengleich mit der Bewegung des Stützdrahts den oder die von den Stützen (1) gelösten Aufrichtdraht oder Aufrichtdrähte (6) anzuheben, den Stützdraht von der Reihe Stützen zu lösen, diesen seitlich aus seiner Reihe in den Zwischenraum zwischen den Pflanzreihen zu beseitigen und die Hölzer durch das Durchziehen des Stützdrahts (2) zwischen die Hebe-Trennorgane von den Drähten zu lösen und zu einer Beschickungs- und einer Zerkleinerungs- und oder Hackmaschine zu transportieren, die von einem Stelzenschlepper oder einer zwischen den Pflanzreihen befindlichen Maschine getragen werden.

2. Maschine zum Lösen des geschnittenen Holzes von den Aufbindedrähten und zur Entfernung des nicht geschnittenen Holzes, die aus folgendem besteht:
- mindestens einer Hebe-/Trennvorrichtung bestehend aus einer seitlich an der Maschine angebrachten Führung (8) zum Aufrichten des Aufrichtdrahts (6), zwei Hebesystemen an jeder Maschinenseite, die in einem Winkel von ca. 45° zum Boden hin geneigt sind,
- mindestens eine Anhebevorrichtung mit einer Anheberolle (10), auf der der Stützdraht (2) zwischen diesem und den Hebesystemen läuft,
und eventuell
- eine Beschickungs- und eine Ausziehvorrichtung, die das Holz ergreifen,
- eine Hackmaschine.

3. Die Maschine laut Anspruch 2 ist dadurch gekennzeichnet, daß sie ein, auf beiden Seiten der Maschine geneigtes Paar Schnecken (9) umfaßt, einen Satz Drehbänder (38) zwischen denen der Stützdraht (2) hindurchläuft, einer Rolle zum Aufrichten des Drahtes (39) am hinteren Ende des Bandes, eine Schneidvorrichtung (43) über dem Draht (2) am hinteren Ende des Bandes und eine Hackmaschine (44) über dem Draht (2) und m hinteren Ende des Bandes (38).

4. Die Maschine laut Ansprüche 2 und 3 ist dadurch gekennzeichnet, daß sie geneigte Schnecken (9) umfaßt, Beschickungsbänder (38) und am hinteren Ende dieser Bänder eine Hackmaschine (44). Sie ist mit einem verschiebbaren Chassis (47) versehen, auf dem eine Rolle (52) zum Anheben des Drahtes (2) aufliegt und mit einer Rolle (50) am vorderen Ende der Bänder (38), wobei der Draht zwischen der vorderen Rolle (50) und der hinteren Rolle (52) gespannt wird.

5. Die Maschine laut Ansprüche 2, 3 und 4 ist dadurch gekennzeichnet, daß die Rolle zum Anheben des Drahtes (2) in ihrer Position beweglich ist.

6. Die Maschine laut Anspruch 2 ist dadurch gekennzeichnet, daß sie aus einem Chassis (1) besteht, auf das Vorrichtungen für das vertikale Anheben und für das seitliche Verschieben montiert sind, so daß sie abwechselnd die eine oder die andere Seite der Reihe bearbeiten kann. Sie umfaßt 5 zusammengefügte Einheiten, bestehend aus einem Hebe-/Trennblock (A), einer Anhebevorrichtung (B), einer Beschickungsvorrichtung (C), einer Ausziehvorrichtung (D) und einer Hackvorrichtung (E). Die gesamte Vorrichtung hebt und zieht den Stützdraht und oder die beweglichen Aufrichtdrähte und zusammen damit die zu entfernende Masse Holz über oder neben dem beschnittenen, vollkommen freigelegtn Rebstock.

7. Die Maschine laut Anspruch 2, ist dadurch gekennzeichnet, daß der oder die Hebe-/Trennblöcke (A) aus zwei vertikalen Rollen (10) und zwei horizontalen Rollen (11) bestehen, wobei eine der beiden mit umgekehrt gängigen Schrauben zum Zentrieren des Stützdrahts versehen ist und die andere mit einer Vertiefung zur Aufnahme und zum Halten des Drahts. Bei den Rollen handelt es sich jeweils um drehbaren Zahnrollen, deren Trenn- und Spannvorrichtung den Durchgang, das Zentrieren, das Anheben und den Antrieb der Maschine mit der Bewegung des vorbeilaufenden Stützdrahts ermöglicht.

8. Die Maschine laut Anspruch 2 ist dadurch gekennzeichnet, daß der Hebe-/Trennblock (A) an der Vorderseite mit zwei tiefgelegten, horizontalen, einander berührenden Schutzscheiben (18) versehen ist, die am Rand mit flexiblen Fingern ausgestattet sind, die in ihrer umgekehrten Rotationsbewegung die Triebe nach außen weisen und deren Öffnung oder Schließung, die beim Durchlauf des Drahts gesteuert wird, nach Belieben mit der Öffnung und Schließung der Rollen (10-11) synchronisert werden kann.

9. Die Maschine laut Anspruch 2 ist dadurch gekennzeichnet, daß der Beschickungsblock (C) aus zwei vertikalen Rollen (11) mit umgekehrter Drehung besteht, die sternförmig und stufenweise mit Fingern (12) bestückt sind, die mit linearer Geschwindigkeit die Triebe mitziehen, die dann nach und nach auf eingeschobene Abweiser gleiten. Dadurch können die Finger nach hinten weggehen und die ergriffenen Triebe werden am Eingang des Ausziehblocks (D) freigegeben.

10. Die Maschine laut Anspruch 2 ist dadurch gekennzeichnet, daß der Ausziehblock (D) aus zwei konzentrischen Trommeln (14, 15) besteht. Die eine ist feststehend und bildet ein Gehäuse, die andere dreht sich und trennt mit Messer (26), Säge oder Klinge die so vom alten Holz getrennten Triebe an der Basis ab und führt sie mit Hilfe der geneigten Finger, die sie durch die hintere Klappe auswerfen, ein.

11. Die Maschine laut Anspruch 2 ist auf eine andere Weise dadurch gekennzeichnet, daß der Ausziehblock (D) aus mindestens einem Element besteht, das vorzugsweise zwei Rollenketten mit Zahnradantrieb umfaßt, wobei die hintere länger ist und in die angehobenen Pflanzen eingeführt wird, die sie mit einem bestimmten Fluchtwinkel ergreift und zu einer zweiten, kürzeren Kette führt, die eine Beschickungseinheit bildet, an deren Eingang die an der Basis abgetrennten Reben mittels einer Schneidevorrichtung zwischen den beweglichen, biegsamen Leisten auf den komprimierten Ketten abgezwickt werden, die diese in einer linearen Bewegung nach außen führen und sie in Richtung Hackblock auswerfen.

## Claims

1. Process enabling individual pruned vine wood to be freed from tying wires and to eliminate small uncut branches characterised in that it involves lifting the upper wire(s) (6) detached from the stakes (1) in the same movement as the lower wires (2) are moved away from the row of stakes sideways in relation to the row into the aisles between rows of vines and removing the wood from the wires by feeding the lower wire between elevator-separator units towards an engagement mechanism and a crushing and/or shredding device carried by the powered agricultural machine straddling the rows of vines or by an inter-line machine.

2. Machine enabling pruned wood to be freed from tying wires and eliminate uncut wood characterised by the fact that it includes:
- at least one elevator-separator assembly comprising at least one guide (8) to the side of the machine to raise the lower wire (6) and two elevator systems tilted towards the ground at an angle of about 45° on each side of the machine,
- at least one elevator-separator assembly including a lift roller (10) on which the lower wire (2) is fed between the roller and the elevator systems, and possibly
- an engagement mechanism assembly and an extractor assembly that seize the wood,
- a shredding device.

3. Machine as per claim 2 characterised by the fact that it includes a pair of header augers (9) tilted on both sides of the machine, a set of rotating belts (38) between which the lower wire (2) passes, a wire lift roller (39) to the rear of the belt, a cutting device (43) above the wire (2) to the rear of the belt and a crusher (44) above the wire and to the rear of the belt.

4. Machine as per claims 2 and 3 characterised by the fact that it includes tilted header augers (9), engagement belts (38) and, to the rear thereof, a crusher (44) and that it is provided with a sliding chassis (47) bearing a roller (52) to lift the wire (2) and, in front of the belt (38), a roller (50), with the wire being tensed between the front roller (50) and the rear roller (52).

5. Machine as per claims 2, 3 and 4 characterised by the fact that the wire (2) lift roller is mobile when in position.

6. Machine as per claim 2 characterised by the fact that it comprises a chassis (1) on which are assembled vertical lifting and side sliding devices that can treat in turn either side of the row, including five assembled units comprising an elevator-separator unit (A), a lift assembly (B), an engagement assembly (C), an extractor assembly (D) and a shredder assembly (E), all of which lift and draws the lower wire and/or the mobile upper wires of the ties and with them the mass of wood to be eliminated above and next to the completely freed pruned vinestock.

7. Machine as per claim 2 characterised by the fact that the elevator separator unit(s)(A) comprise(s) vertical rollers (10) and two horizontal rollers (11), either of which is equipped with a reverse pitch screw to re-centre the lower wire and the second with a wire reception and support groove, all notched and rotating, whose separation and tightening device allows for the passage, re-centring, raising and drive of the lower wire being fed through as the machine advances.

8. Machine as per claim 2 characterised by the fact that the elevator-separator unit (A) is equipped at the front with two low-frame and tangential horizontal protection disks (18) equipped around the edges with flexible fingers that separate the shoots in their reverse rotational movement towards the exterior and whose controlled opening or closing as the lower wire is fed through can be synchronised by the operator with that of the rollers (10-11).

9. Machine as per claim 2 characterised by the fact that the engagement unit (C) comprises two vertical rollers (11) working in reverse rotation, bristling with fingers (12) in layered star shapes leading the vine shoots at linear speed sliding them gradually over wedged deflectors so the fingers can move off to the rear to free the engaged shoots as they come to the extractor unit (D).

10. Machine as per claim 2 characterised by the fact that the extractor unit (D) comprises two concentric drums (14 and 15), one of which is fixed forming a casing, while the other is in rotation and is equipped with knives, saws or blades (26) that cut the shoots separated from the old shoot at the base, drawing them in using the tilted fingers before ejecting them by the rear flap.

11. Machine as per claim 2 characterised by another system in that the extractor unit (D) comprises at least one component preferably including two roller lines driven by pinions, the rear and longer of the two driving into the raised vegetation that it seizes at a certain departure angle and moves on to a second and shorter front line that forms an engagement assembly where the shoots, held by hinged, flexible clamps on compression lines, are cut as they come into it at the base using a cutting device and then driven by a linear motion by the same gripping system to be ejected towards the shredding unit.
